Europäisches Patentamt

(19) European Patent Office

Office européen des brevets

(11) Veröffentlichungsnummer: **0 028 283**
**A1**

(12) ## EUROPÄISCHE PATENTANMELDUNG

(21) Anmeldenummer: **80101246.9**

(22) Anmeldetag: **12.03.80**

(51) Int. Cl.³: **A 47 G 1/06**
**A 47 G 1/14, G 03 B 21/54**

(30) Priorität: **03.11.79 DE 7931160 U**

(43) Veröffentlichungstag der Anmeldung:
**13.05.81 Patentblatt 81/19**

(84) Benannte Vertragsstaaten:
**AT BE CH DE FR GB LU NL SE**

(71) Anmelder: **Porst, Hannsheinz**
**Schmausenbuckstrasse 86**
**D-8500 Nürnberg 6(DE)**

(72) Erfinder: **Müller, Dieter**
**Am Steig 16**
**D-8501 Schwanstetten(DE)**

(74) Vertreter: **Schwindling, Hans, Dipl.-Phys.**
**Kohler-Schwindling-Späth Patentanwälte**
**Hohentwielstrasse 41**
**D-7000 Stuttgart 1(DE)**

(54) **Einrichtung zum geordneten Aufbewahren von Photographien und Kassette dazu.**

(57) Eine Einrichtung zum geordneten Aufbewahren von Photographien umfaßt flache Kassetten (62) und einen Ständer (61) zur Aufnahme der Kassetten. Die Kassetten (62) bestehen aus einem Grundteil (1) und einem Deckelteil (2), die beide jeweils Abschnitte (11,12,21,22) der Unter-und der Oberseite der Kassette und diese Abschnitte verbindende Stege (13,23) umfassen. Eine solche Kassette ist auch als Bilderrahmen verwendbar. Der Ständer (61) ist mit Rippen (64) versehen, welche Abteile (65) zur Aufnahme der Kassetten (62) begrenzen, und weist vorzugsweise ein Fach zur Aufnahme von Negativ-Streifen auf.

Fig. 12

EP 0 028 283 A1

Anmelder:

Hannsheinz Porst
Schmausenbuckstraße 86
D-8500 Nürnberg 6

Stuttgart, den 3. März 1980
Gm 960 EP S/We

Vertreter:

Kohler-Schwindling-Späth
Patentanwälte
Hohentwielstraße 41
D-7000 Stuttgart 1

BEZEICHNUNG GEÄNDERT
siehe Titelseite
Einrichtung zum geordneten Aufbewahren von Photographien

Die Erfindung betrifft eine Einrichtung zum geordneten
Aufbewahren von Photographien.

Es ist bekannt, daß die große Mehrzahl aller von Amateuren
hergestellter photographischer Bilder in mehr oder weniger
ungeordneter Weise in Schubladen, Schachteln, Umschlägen
und dergleichen aufbewahrt wird. Die bisher bekannten Einrichtungen sind zu voluminös und in ihrem Gebrauch zu umständlich, als daß sie vom Photoamatuer in großem Umfange

./.

zur Aufbewahrung seiner Bilder angenommen worden wäre. Dies gilt insbesondere für die Aufbewahrung der Bilder in Photoalben, deren Seiten, Zwischenlagen und Einband im Verhältnis zu den aufgenommenen Bildern ein sehr großes Volumen haben, die eine sorgfältige Auswahl der einzuordnenden Bilder erfordern, weil es unmöglich ist, alle Bilder in solchen Alben aufzunehmen, und die den weiteren Nachteil haben, daß im wesentlichen nur eine Person die in einem Album enthaltenen Bilder betrachten kann, so daß es weitgehend unmöglich ist, die Bilder einer größeren Gruppe von Personen gleichzeitig vorzuführen. Es ist auch schwierig, solche Alben mitzuführen, um sie außerhalb der eigenen Wohnung vorzuzeigen.

Im wesentlichen die gleichen Nachteile gelten auch für solche Formen von albumähnlichen Anordnungen, bei denen die einzelnen Photographien in Sichthüllen aufgenommen sind, die entweder in einen Ringbinder eingehängt sein können oder aber zu schuppenförmigen Sätzen zusammengefaßt sind. Auch hier ist der Aufwand zu groß, als daß grundsätzlich alle Photos auf diese Weise untergebracht werden könnten, und es müssen stets alle in einer solchen Anordnung zusammengefaßten Bilder gleichzeitig weitergegeben werden.

Es ist auch bekannt, die vom Photoamateur bisher benutzten Kartons oder Schachteln in eine etwas zweckmäßigere Form zu bringen, indem der Unterteil der Schachtel ausreichend hoch ausgebildet und mit vertikalen Zwischenwänden versehen wird, damit in den so entstehenden Fächern Pakete von Photographien stehend aufbewahrt werden können. Eine solche Anordnung ähnelt in gewisser Hinsicht einem Karteikasten. Ein auf das Unterteil aufsetzbarer Stülpdeckel schützt die darin enthaltenen Photographien. Auch die Benutzung eines solchen Kastens erfordert jedoch eine gewisse Archivierungs-

./.

Arbeit, damit wenigstens der Inhalt eines Kastens festgelegt wird, und es besteht trotzdem die Gefahr, daß die darin aufbewahrten Bilder bald durcheinander geraten, so daß
der Effekt nicht wesentlich von dem losen Aufbewahren von
Bildern in Schubladen und Schuhkartons verschieden ist.
Weiterhin sind solche Kästen wegen ihrer Größe nicht ohne
weiteres zu transportieren.

Demgegenüber liegt der Erfindung die Aufgabe zugrunde,
eine Einrichtung zum Aufbewahren von Photographien zu
schaffen, die es ermöglicht, ohne besondere Archivierungsarbeit Ordnung zu halten, die das Herumreichen der Bilder
ermöglicht und die auch leicht mitführbar ist.

Diese Aufgabe wird nach der Erfindung durch eine flache,
rechteckige Kassette mit einem dem Format der aufzubewahrenden Photographien angepaßten Grundriß und einen Ständer gelöst, der eine Anzahl zueinander paralleler Rippen aufweist,
welche die Kassetten aufnehmende Abteile begrenzen.

Wenn die Kassette einer solchen Einrichtung so ausgebildet
wird, daß sie gerade die auf einen Film entfallenden Bilder
aufzunehmen in der Lage ist, können jeweils alle Bilder eines Filmes in eine solche Kassette gegeben werden, so daß
auf diese Weise eine ganz natürliche Ordnung der Bilder entsteht. Die Kassetten lassen sich in dem Ständer geordnet
aufbewahren. Zum Betrachten und Verteilen in einem größeren
Personenkreis lassen sich die Bilder ohne weiteres der
Kassette entnehmen und einzeln herumreichen. Zu diesem Zweck
lassen sich solche Kassetten getrennt vom Ständer oder auch
mit den Kassetten gefüllte Ständer leicht mitführen.

./.

Eine bevorzugte Ausführungsform solcher Kassetten, die in Verbindung mit einem Ständer oder auch unabhängig von einem solchen benutzbar sind, besteht aus einem Abschnitte ihrer Unter- und Oberseite sowie diese Abschnitte verbindende Stege umfassenden Grundteil und einem auf das offene Ende des Grundteiles aufgeschobenen, ebenfalls Abschnitte ihrer Unter- und Oberseite sowie diese Abschnitte verbindende Stege umfassenden Deckelteil. Eine solche Kassette weist wenigstens im mittleren Bereich ihrer Oberseite ein glasklares Sichtfenster auf.

Bei einer solchen Ausführung der Kassette ist das Einlegen und Herausnehmen der Photographien besonders einfach, weil der Grundteil der Kassette so gehalten werden kann, daß die Photographien auf dessen Unterseite aufliegen und dabei aus dessen offenem Ende ein Stück weit herausragen, so daß sie sowohl sicher gehalten als auch leicht erfaßbar sind. Bei geschlossener Kassette erscheint jeweils das oberste Bild in dem Sichtfenster, das von einem rahmenartigen Abschnitt der Kassette umgeben sein kann, so daß eine solche Kassette auch nach Art eines Bilderrahmens verwendbar ist, der einen besonders leichten Bildwechsel ermöglicht.

Für das Mitführen solcher Behälter sowie auch ihre Stapelbarkeit ist es besonders zweckmäßig, wenn die Außenflächen der an dem Grundteil und dem Deckelteil angebrachten Abschnitten der Ober- und Unterseiten sowie der Stege miteinander fluchten. Bei einer besonders bevorzugten Ausführungsform eines solchen Behälters sind das Grundteil und das Deckelteil derart gestuft ausgebildet, daß der Oberseitenabschnitt des Deckelteiles den Unterseitenabschnitt des Grundteiles überlappt und die am Grundteil und am Oberteil angebrachten Stege im Überlappungsbereich zu den Ober- und Unterseiten parallele, ineinandergreifende Schiebeführungen

./.

aufweisen. Diese Ausbildung hat den Vorteil, daß der in den Grundteil eingelegte Bilderstapel nach Abnehmen des Deckelteiles besonders gut zugänglich ist, weil er nach obenhin weitgehend freiliegt, während er zugleich durch den sehr großen Unterseitenabschnitt des Grundteiles sicher abgestützt wird. Außerdem brauchen an den Ober- und Unterseitenabschnitten keinerlei Führungs- und Halteglieder angebracht zu sein, so daß diese Seiten aus sehr dünnem Material ausgebildet werden können und die Kassette sehr flach gehalten werden kann. Dagegen steht an den Stegen ausreichend Platz für kräftige und sichere Schiebeführungen zur Verfügung.

Weiterhin kann bei einem solchen Behälter der Oberseitenabschnitt des Grundteiles im mittleren Bereich eine Aussparung aufweisen, in die eine Zunge am Oberseitenabschnitt des Deckelteiles hineinragt. Hierdurch wird die Zugänglichkeit und Erkennbarkeit der im Grundteil angeordneten Bilder nach Abnehmen des Deckelteils noch verbessert. Insbesondere kann aber bei einer solchen Ausbildung der Oberseitenabschnitt des Grundteiles einen Rahmenabschnitt für das Sichtfenster bilden, und das Sichtfenster vollständig von einem Abschnitt des Deckelteils gebildet werden. Diese Maßnahme führt zu einem besonders guten Aussehen des Behälters, das für seine Verwendung nicht ohne Bedeutung ist. Insbesondere ist keine das Sichtfenster teilende Fuge vorhanden. Auch fertigungstechnisch bildet diese Ausführungsform einen Vorteil, weil nur eines der Teile aus einem Material zu bestehen braucht, welches für die Bildung des glasklaren Sichtfensters geeignet ist. So kann insbesondere das Grundteil aus einem undurchsichtigen und das Deckelteil aus einem durchsichtigen Kunststoff bestehen. Der vom Oberseitenabschnitt des Grundteiles gebildete Rahmenabschnitt kann dann weiterhin durch einen strukturierten Bereich des Oberseitenabschnittes des

./.

Deckelteiles zu einem geschlossenen Rahmen ergänzt werden.

Eine sichere Verbindung zwischen Grundteil und Deckelteil bei geschlossener Kassette kann auf einfache Weise dadurch erzielt werden, daß an übereinandergreifenden Abschnitten des Grundteiles und des Deckelteiles elastisch ineinandergreifende Rasten angebracht sind. Weiterhin ist es zur sicheren Handhabung eines solchen Behälters von Vorteil, wenn die am Grundteil und am Deckelteil vorhandenen Stege mit eine Riffelung aufweisenden Griff-Flächen versehen sind. Ferner kann insbesondere am Steg des Grundteiles ein Etikettenfeld angebracht sein, das es dem Benutzer ermöglicht, durch direktes Beschriften oder Aufkleben eines Etikettes eine Angabe über den Kassetteninhalt anzubringen.

Wie bereits erwähnt, eignet sich eine solche Kassette auch als Art Bilderrahmen, bei dem das zur Schau gestellte Bild besonders leicht auswechselbar ist. Wegen ihrer flachen Form ist die Kassette auch ohne weiteres dazu geeignet,wie ein Bilderrahmen aufgestellt oder aufgehängt zu werden. Daher sieht eine Ausführungsform der Erfindung vor, daß die Kassette mit einem ihr Aufstellen ermöglichenden Stützglied versehen ist. Ein solches Stützglied kann beispielsweise mit der Unterseite des Grundteiles lösbar verbunden sein, so daß die Kassette bei Bedarf von dem Stützglied gelöst und unabhängig davon mitgeführt werden kann.

Bei einer bevorzugten Ausführungsform der Erfindung ist das Stützglied in eine in der Unterseite des Grundteiles vorhandene Öffnung eingesteckt, die zugleich das Aufhängen der Kassette nach Art eines Bilderrahmens ermöglicht.

./.

Eine bevorzugte Ausführungsform eines Ständers zur Aufnahme
der die Bilder enthaltenden Kassetten weist eine Grundplatte
auf, von d er die Rippen nach oben abstehen und die mit einem Fach zur Aufnahme von Negativ-Streifen versehen ist. Ein
solcher Ständer ermöglicht demnach nicht nur die Unterbringung einer bestimmten Anzahl von Kassetten, sondern
auch der dazugehörigen Negative. Hierin liegt ein besonderer
Vorteil einer solchen Ausführungsform des Ständers.

Bei einer Ausführungsform eines solchen Ständers ist an einem Längsrand der Grundplatte ein kastenartiger Behälter angeordnet, an dessen dem anderen Längsrand der Grundplatte
zugewandten Außenseite sich die senkrecht zu den Längsseiten
der Grundplatte gerichteten Rippen anschließen. Der kastenartige Behälter kann zweckmäßig mit einem Stülpdeckel versehen sein. In einen solchen Behälter können die Negativ-
Streifen, gegebenenfalls mit ihren Schutzhüllen, leicht
eingelegt werden, und es sind die Negativ-Streifen auch zur
Entnahme wieder leicht zugänglich. Durch den Stülpdeckel
sind die Negative gegen schädliche Umwelt-Einflüsse, insbesondere gegen Staub, aber auch gegen mechanische Beschädigung, gut geschützt.

Bei einer anderen Ausführungsform der Erfindung ist die
Grundplatte als Hohlkörper ausgebildet und es befindet sich
das Fach unter der die Rippen tragenden Oberseite der Grundplatte. Dieses Fach ist von einem Rand der Grundplatte her
zugänglich. Bei einer solchen Ausführungsform kann in der
Grundplatte eine Schublade zur Aufnahme der Negative angeordnet sein.

Für eine raumsparende Unterbringung einer großen Anzahl von
Bildern kann es zweckmäßig sein, wenn mehrere der erfindungsgemäßen Einrichtungen übereinander-gestapelt werden können.
Zu diesem Zweck sieht eine Ausführungsform der Erfindung vor,
daß die Grundplatte des Ständers an der Unterseite eine Vertiefung aufweist, die ebenso groß ist wie die Gesamtheit der
an der Oberseite der Grundplatte von den Rippen begrenzten
Abteile, so daß die Vertiefung die oberen Abschnitte der
Kassetten aufzunehmen vermag, die in einen anderen, gleichen
Ständer eingesetzt worden sind, so daß der Ständer mit seiner Vertiefung auf den Kassetten des unteren Ständers sicher
aufsitzt, wenn mehrere solcher Einrichtungen übereinandergestellt werden.

Weitere Einzelheiten und Ausgestaltungen der Erfindung ergeben sich aus der nachfolgenden Beschreibung der in der
Zeichnung dargestellten Ausführungsbeispiele. Die der Beschreibung und der Zeichnung zu entnehmenden Merkmale können bei anderen Ausführungsformen der Erfindung einzeln für
sich oder zu mehreren in Kombination Anwendung finden. Es
zeigen

Fig. 1 die perspektivische Darstellung einer nach der Erfindung ausgebildeten Kassette zum Aufbewahren von
       Photographien,

Fig. 2 eine Draufsicht auf die Kassette nach Fig. 1,

Fig. 3 eine Ansicht der Kassette in Richtung des Pfeiles
       III in Fig. 2,

Fig. 4 eine Draufsicht auf den Grundteil dieser Kassette,

Fig. 5 einen Schnitt längs der Linie V-V durch die Kasset-
       te nach Fig. 2,

BAD ORIGINAL          ./.

Fig. 6 einen Schnitt längs der Linie VI-VI durch einen
Randbereich der Kassette nach Fig. 2 in vergrößertem Maßstab,

Fig. 7 die Seitenansicht einer mit einem das Aufstellen ermöglichenden Stützglied versehenen Kassette nach
der Erfindung,

Fig. 8 die Rückansicht einer mit einem das Aufhängen ermöglichenden Stützglied versehenen Kassette nach
der Erfindung,

Fig. 9 den Behälter nach Fig. 8 in Seitenansicht und teilweise im Schnitt längs der Linie IX-IX,

Fig. 10 eine weitere Ausführungsform eines mit einem das
Aufstellen ermöglichenden Stützglied versehenen Behälters nach der Erfindung,

Fig. 11 die Rückansicht des Behälters nach Fig. 10 ohne
Stützglied,

Fig. 12 die perspektivische Darstellung einer Einrichtung
nach der Erfindung, umfassend einen Ständer mit eingesetzten Kassetten,

Fig. 13 einen Querschnitt durch den Ständer der Einrichtung
nach Fig. 12,

Fig. 14 eine Vorderansicht einer weiteren Ausführungsform
eines Ständers einer erfindungsgemäßen Einrichtung
und

Fig. 15 einen Schnitt längs der Linie XV-XV durch den Ständer
nach Fig. 14.

./.

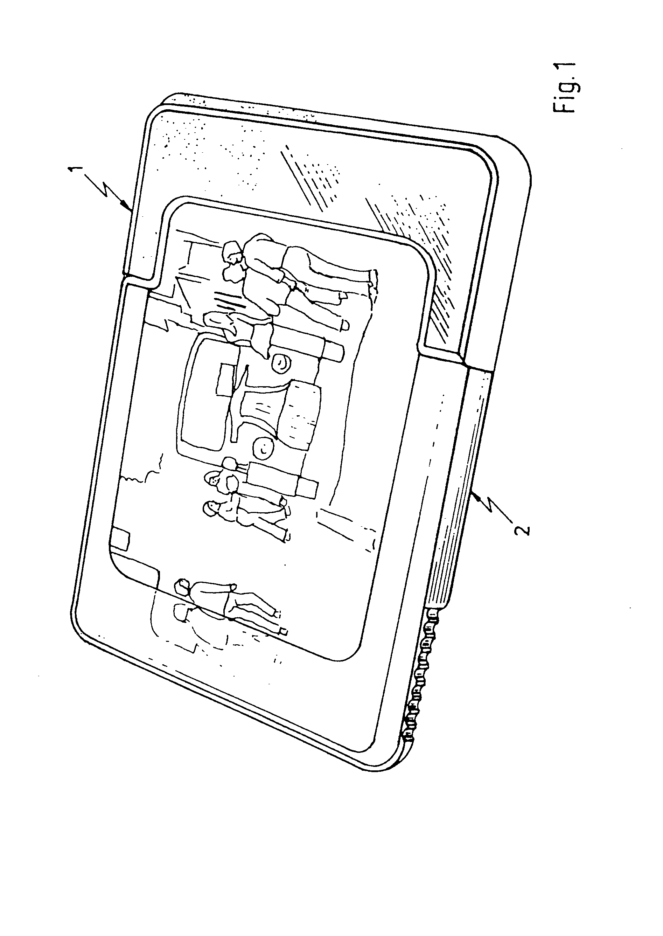

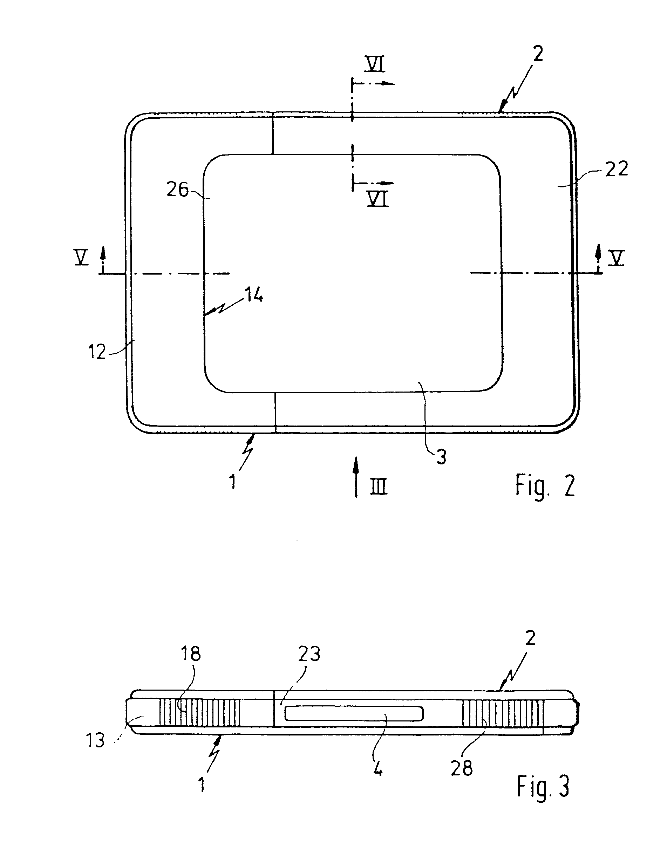

Der in den Fig. 1 bis 6 dargestellte Behälter hat die Form
einer flachen, rechteckigen Kassette oder eines Etuis die,
bzw. das aus einem Grundteil 1 und einem Deckelteil 2 besteht.

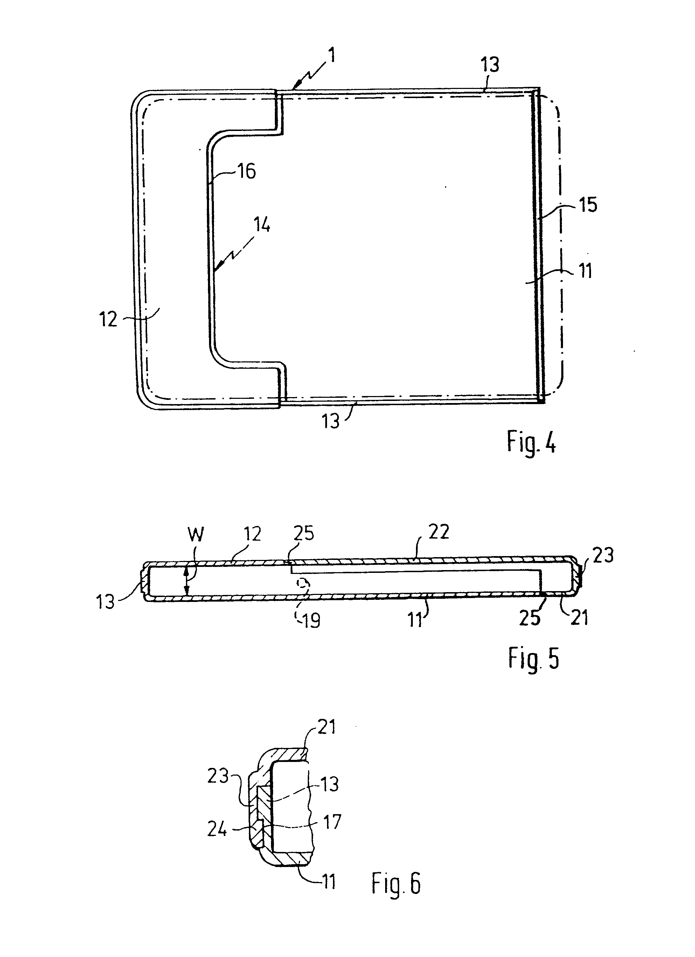

Wie insbesondere aus Fig. 4 ersichtlich umfaßt das Grundteil
1 einen Abschnitt 11 der Unterseite einen Abschnitt 12 der
Oberseite sowie die Ränder dieser Abschnitte verbindende
Stege 13 der die Unterseite bildende Abschnitt 11 ist sehr
viel länger ausgebildet als der die Oberseite bildende Abschnitt 12. Außerdem weist der Oberseitenabschnitt 12 im
mittleren Bereich eine Aussparung 14 auf, derart, daß der
Oberseitenabschnitt 12 sich nur über einen Randbereich erstreckt, der den Abschnitt eines Rahmen bildet. Der Unterseitenabschnitt 11 und der Oberseitenabschnitt 12 sind an
ihren freien Rändern mit Falzen 15 bzw. 16 versehen. Der
Steg 13 erstreckt sich über die ganze Länge des Unterseitenabschnittes 11 und ist an seiner Außenseite mit einer zum
Unterseitenabschnitt 11 parallelen Rinne 17 versehen, die
eine Schiebeführung für das Deckelteil 2 bildet.

Das Deckelteil 2 hat eine zum Grundteil 1 komplementäre
Form und umfaßt einen Unterseitenabschnitt 21, der bei ge-

./.

schlossenem Behälter an den Unterseitenabschnitt 11 des
Grundteiles anschließt, einen in entsprechender Weise an
den Oberseitenabschnitt 12 des Grundteiles anschließenden
Oberseitenabschnitt 22 sowie einen den Unterseitenabschnitt
21 und den Oberseitenabschnitt 22 verbindenden Steg 23.
Dieser Steg erstreckt sich über die ganze Länge des Oberseitenabschnittes 22 und übergreift den am Rand des Unterseitenabschnittes 11 angebrachten Steg 13. An seinem freien
Ende weist der Steg 23 des Deckelteiles eine nach innen vorspringende Leiste 24 auf, welche in die Längsnute 17 am Steg
13 des Grundteiles eingreift. Die Unterseiten- und Oberseitenabschnitte 21, 22 des Deckelteiles sind mit Falzen 25 versehen, welche in die entsprechende Falze 15 bzw. 16 am Grundteil 1 bei geschlossenem Behälter eingreifen. Entsprechend
weist der Oberseitenabschnitt 22 des Deckelteiles 2 eine
Zunge 26 auf, welche die Aussparung 14 im Oberseitenteil 12
des Grundkörpers 1 ausfüllt.

Die Stege 13 und 23 sind in den Bereichen, welche an die von
der Nut 17 und dem Steg 24 gebildete Schiebeführung anschliessen, verstärkt, so daß ihre Innen- und Außenflächen miteinander fluchten. Außerdem bilden diese Stege eine den gesamten Behälter umlaufende Wulst, deren Außenseite nahe den
Enden des Grundteiles 1 und des Deckelteiles 2 mit einer
Riffelung 18 bzw. 28 versehen ist. Hierdurch wird die Griffigkeit der Kassette erhöht. Außerdem sind an den übereinandergreifenden Abschnitten der Stege 13 und 23 bei geschlossener Kassette als Rastglieder ineinandergreifende Erhöhungen und Vertiefungen vorgesehen, die in Fig. 5 durch
den gestrichelten Kreis 29 angedeutet sind.

Das Grundteil 1 besteht bei dem dargestellten Ausführungsbeispiel aus einem undurchsichtigen Kunststoff, wogegen das

./.

Deckelteil 2 aus einem durchsichtigen Kunststoff hergestellt ist. In Verlängerung der Randbereiche des Oberseitenabschnittes 11 des Grundteiles 1 hat der Oberseitenabschnitt 21 des Deckelteiles eine geräuhte Struktur, so daß in Verbindung mit dem Oberseitenabschnitt 11 des Grundteiles 1 ein geschlossener Rahmen entsteht, der ein Sichtfenster 3 umgibt, das aus einem glasklaren Material besteht. Statt einer Rauhung könnte auch eine undurchsichtige Abdeckung, beispielsweise ein in die Kassette eingelegtes Passepartout verwendet werden, um die Rahmenwirkung in dem durchsichtigen Deckelteil zu erzeugen. Das Sichtfenster 3 gibt den Blick auf innerhalb der Kassette angeordnete Photographien frei.

Die Größe des Behälters ist so gewählt, daß er alle Bilder eines Filmes in einem handelsüblichen Format aufnehmen kann. Bei dem dargestellten Ausführungsbeispiel ist die Grundfläche der Kassette so bemessen, daß sie Bilder vom Format $10 \times 15 \text{ cm}^2$ aufnehmen kann. Die lichte Weite b der Kassette ist etwa gleich Nxd, wenn N die Anzahl der Bilder auf einem handelsüblichen Film und d die Papierstärke üblicher Photographien bedeutet. So ist beispielsweise eine lichte Weite von 10 mm ausreichend, um 20 bis 25 Papierbilder aufzunehmen. Wie bereits erwähnt, ist das jeweils oberste Bild durch das glasklare Sichtfenster 3 erkennbar. Bei einer Wandstärke von Oberseite und Unterseite von 1,5 mm hat eine solche Kassette eine Gesamtdicke, die im allgemeinen 15 mm nicht überschreiten dürfte. Eine solche Kassette ist ähnlich wie eine Brieftasche leicht mitzuführen und kann in geeigneten Ständern, die ähnlich den Ständern von Tonband-Kassetten ausgebildet sein können, ordentlich aufbewahrt werden. Da jede Kassette die Bilder eines ganzen Filmes aufnimmt, genügt es, die Bilder jeweils eines Filmes in eine Kassette einzulegen, um die Bilder in einer gewissen Ord-

./.

nung stets griffbereit zu haben. Das Einlegen der Bilder ist problemlos, da der Bildstapel nach Abnehmen des Deckelteiles auf den Unterseitenabschnitt des Grundteiles aufgelegt werden kann, dessen Länge fast der Länge der Bilder entspricht, und dann unter den Oberseitenabschnitt des Grundteiles geschoben werden kann. Das Aufschieben des Deckels ist ebenfalls völlig problemlos. Daher ist es auch leicht möglich, die Bilder jederzeit der Kassette zum Herumzeigen zu entnehmen und danach wieder in die Kassette zurückzulegen. Soweit es als nicht ausreichend angesehen wird, daß der Inhalt der Kassette durch das oberste Bild, durch das Sichtfenster sichtbare Bild charakterisiert wird, kann am Rand der Kassette ein Etikettenfeld 4 vorgesehen sein, wie es in Fig. 3 dargestellt ist. Dieses Feld befindet sich am Steg 23 des Deckelteiles. Es kann sich dabei um ein unmittelbar beschreibbares Feld handeln, auf das auch bei Bedarf ein Etikett aufgeklebt werden kann. Es wäre auch möglich, solche Etikettenfelder an anderen Stellen anzubringen, beispielsweise an der Stirnseite der Kassette, aber auch an Ober- oder Unterseiten.

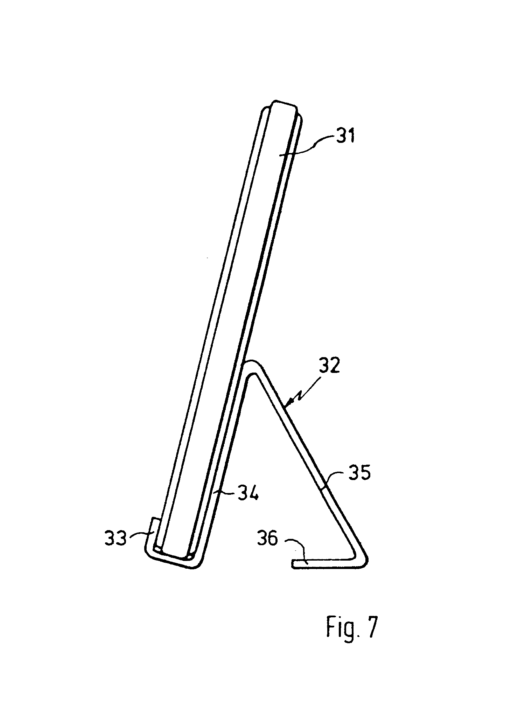

Die schlanke Form des Behälters in Verbindung mit dem von einem Rahmenbereich umgebenen Sichtfenster macht die Kassette zugleich als Bilderrahmen verwendbar, bei dem das dargebotene Bild mühelos gegen ein anderes aus dem in der Kassette enthaltenden Vorrat ausgetauscht werden kann. Daher zeigt Fig. 7 eine Ausführungsform einer solchen Kassette, bei der die Kassette 31 mit einem ihr Aufstellen ermöglichendem Stützglied 32 versehen ist. Dieses Stützglied besteht bei dem dargestellten Ausführungsbeispiel aus einem bandförmigen Material, das sich über einen Abschnitt der Rückseite der Kassette 31 erstreckt und an seinem vorderen Ende in einen hakenförmigen Abschnitt 33 ausläuft, in den die Kassette 31 mit ihrem unteren Rand eingreift. Vom oberen Ende des an der Rückseite der Kassette 31 anliegenden Abschnittes 34 geht ein Abschnitt 35 aus, der mit dem Abschnitt 34 einen spitzen Winkel einschließt und eine Art Fuß bildet, dessen unteres Ende 36 noch so abgewinkelt sein kann, daß es in einer den hakenförmigen Abschnitt 33 tangierenden Ebene liegt. Das Stützglied 32 kann die Kassette 31 im Hochformat oder im Querformat aufnehmen. Es versteht sich, daß Stützglieder, welche die gleiche Funktion haben, in unterschiedlichster Weise und aus den unterschiedlichsten Materialien hergestellt werden können.

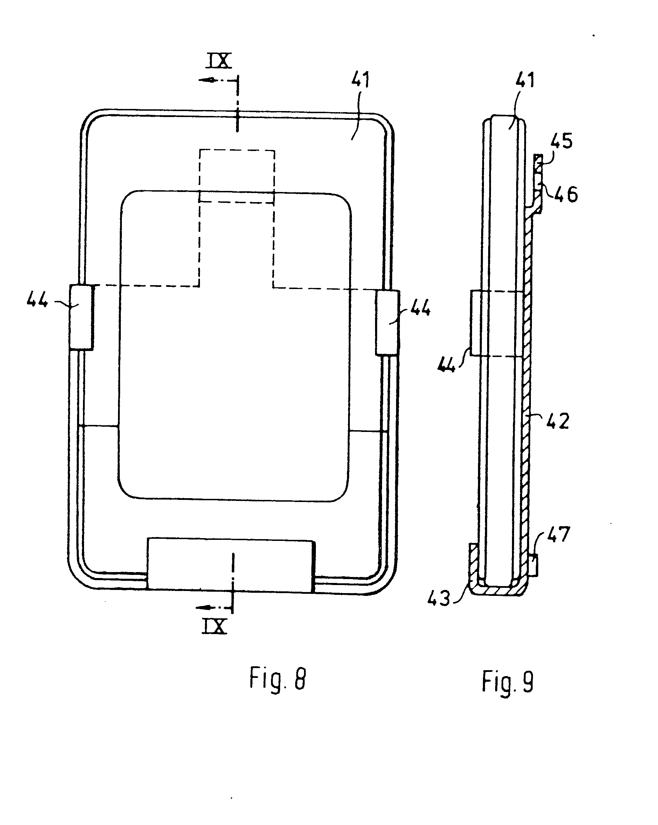

Einen Behälter nach der Erfindung mit einem Stützglied, welche das Aufhängen des Behälters ermöglicht, ist in den Fig. 8 und 9 dargestellt. In diesem Fall erstreckt sich das Stützglied 42 im wesentlichen über die ganze Rückseite der Kassette 41 und weist außer einem hakenförmigen Abschnitt 43 an seinem unteren Ende noch zwei die seitlichen Ränder der Kassette 41 umgreifende hakenförmige Ansätze 44 auf. Am oberen Rand ist das Stützglied 42 mit einer abgekröpften Lasche 45 versehen, die ein Loch zur Aufnahme eines Nagels oder Hakens für die aufzuhängende Kassette aufweist. Um eine vertikale Lage der aufgehängten Kassette zu gewährleisten, sind am unteren Rand des Stützgliedes 42 Vorsprünge 47 angebrac ht, deren Enden mit der Außenfläche der Lasche 45 in einer zum Stützglied 42 parallelen Ebene liegen.

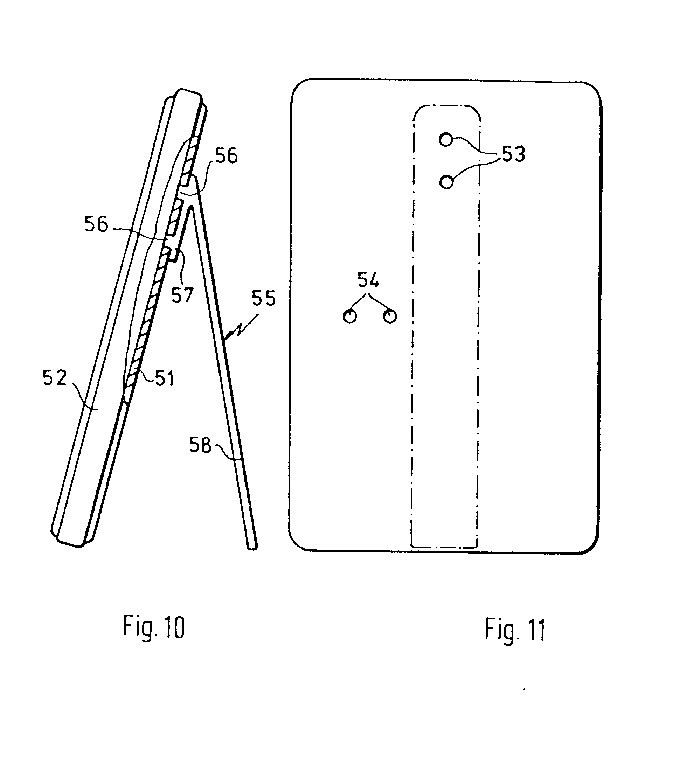

Eine besonders einfache Ausbildung eines Behälters, der wahlweise aufstellbar oder aufhängbar ist, ist in den Fig. 10 und 11 dargestellt. Hier weist einfach die Rückseite 51 der Kassette 52 nahe einer Schmalseite und nahe einer Breitseite jeweils eine Bohrung 53 bzw. 54 auf, in die unmittelbar ein Nagel oder Haken zum Aufhängen der Kassette einge-

./.

führt werden kann. In diesem Fall darf die Kassette nicht
übermäßig stark gefüllt werden, damit genug Platz für den
eintretenden Abschnitt des Nagels oder des Hakens bleibt.
Soll diese Kassette nicht aufgehängt, sondern aufgestellt
werden, kann ein einfaches Stützglied 55 in eine dieser
Löcher eingehängt werden, wie es Fig. 10 zeigt. Dieses Stützglied besteht aus einem einfachen, abgewinkelten Bandmaterial, das an seinem oberen Ende einen Zapfen 56 aufweist,
mit dem es beispielsweise in die Bohrung 53 eingreift. Ein
Abschnitt 57 des Stützgliedes liegt wiederum an der Rückseite 51 der Kassette 52 an, während ein anderer Abschnitt 58
ein schräg von der Rückwand der Kassette abstehendes Bein
bildet.

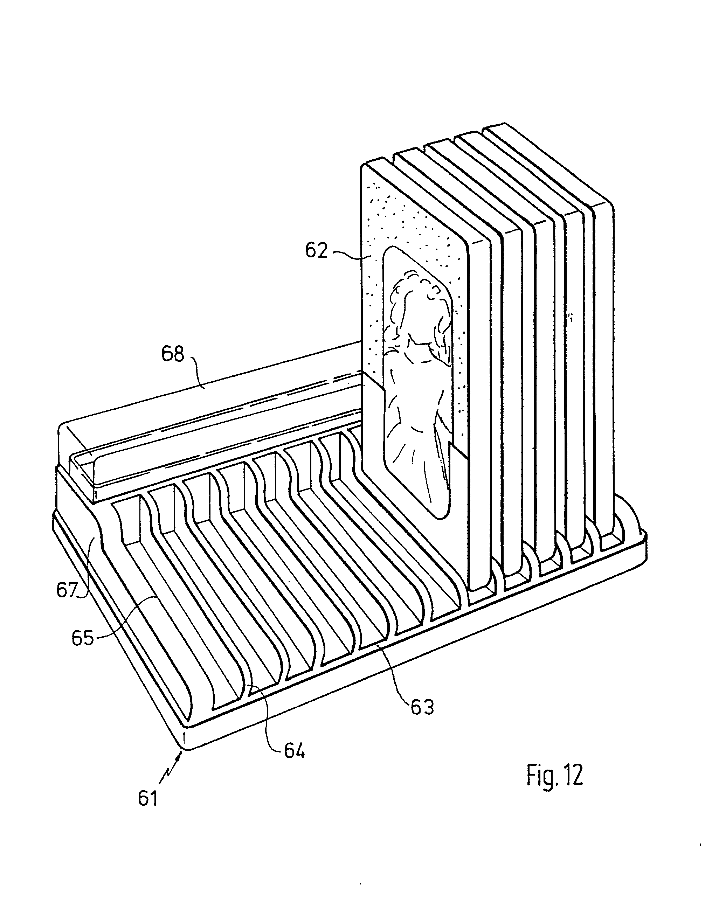

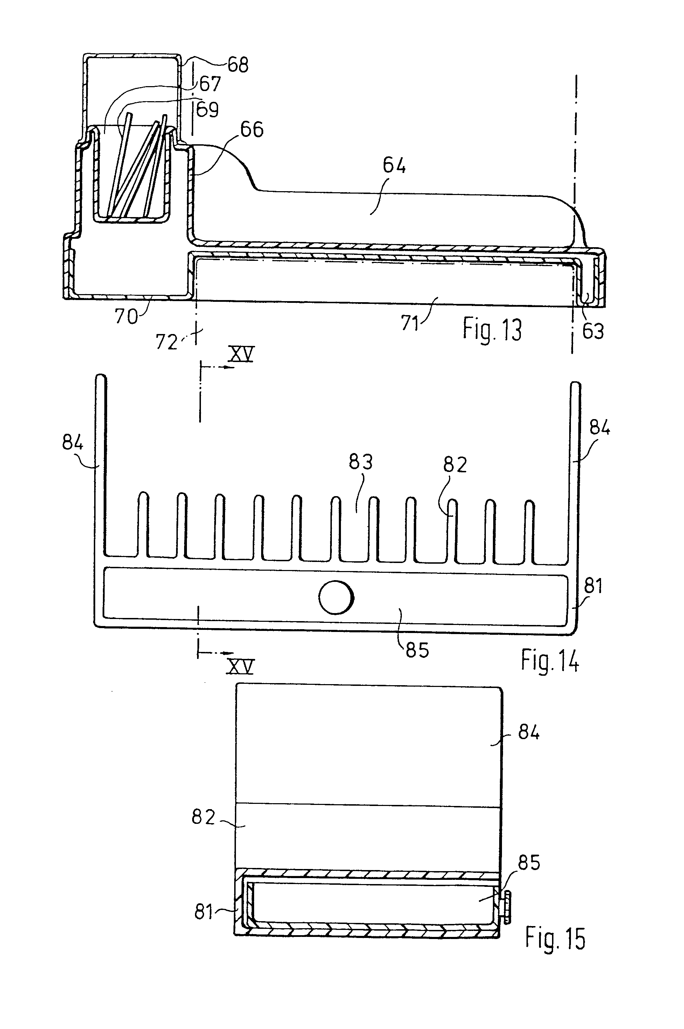

Soweit die Kassetten nicht in der vorstehend beschriebenen
Weise als Bilderrahmen verwendet werden, können sie in einen Ständer 61 gestellt werden, wie es Fig. 12 zeigt. Der
Ständer 61 ist zur Aufnahme von 12 Kassetten 62 ausgebildet
und besteht aus einer Grundplatte 63, von der Rippen 64
nach oben abstehen, die zwischen sich Abteile 65 zur Aufnahme der Kassetten 62 begrenzen. Wie Fig. 13 näher zeigt,
besteht die Grundplatte 63 mit den Rippen 64 aus einem tiefgezogenen Folienmaterial. Die Rippen 64 sind infolgedessen
doppelwandig und in einem solchen Abstand voneinander angeordnet, daß sie die Kassetten 62 zwischen den federnden
Doppelwänden der Rippen 64 leicht klemmend aufnehmen. Die
von den Rippen 64 begrenzten Abteile 65 sind zu einem Längsrand der Grundplatte hin offen, während sie am anderen Ende
durch die Außenseite 66 eines kastenartigen Behälters 67 begrenzt sind, der an einem Längsrand der Grundplatte 63 angeordnet ist. Dieser kastenartige Behälter ist nach oben
durch einen Stülpdeckel 68 abgeschlossen. Der kastenartige
Behälter 67 bildet ein Fach zur Aufnahme von Negativ-Streifen, die mitsamt ihren Schutztaschen 69, in denen sie gewöhnlich von den Entwicklungsanstalten geliefert werden, in
den Behälter 67 hineingestellt werden können, wie es in
Fig. 13 schematisch angedeutet ist. Die Negativ-Streifen in
ihren Schutztaschen 69 stehen demnach innerhalb des Behälters 67 ähnlich wie Karteikarten und können nach Abnehmen des Deckels 68 leicht in dem Behälter 67 untergebracht sowie wieder daraus entnommen werden. Die Grundplatte 63 ist mit einem eingesetzten Boden 70 versehen, der ebenfalls aus einem tiefgezogenen Teil besteht. Dieser Boden weist eine Vertiefung 71 auf, deren Breite ebensogroß ist wie die Breite der Kassetten und die sich über die gleiche Länge des Ständers erstreckt wie die von den Rippen begrenzten Abteile. Die Vertiefung 71 kann daher die in Fig. 13 strich-punktiert angedeuteten, oberen Abschnitte 72 von Kassetten aufnehmen, die sich in einem anderen Ständer befinden, wenn ein Bedarf dafür besteht, aus Gründen der Platzersparnis auf einen mit Kassetten gefüllten Ständer einen anderen, ebensolchen Ständer aufzusetzen.

Die Fig. 14 und 15 zeigen eine andere Ausführungsform eines Ständers, der aus einem gespritzten Kunststoffteil besteht. Dieser Ständer weist eine Grundplatte 81 auf, die gerade nur so breit ist wie die einzusetzenden Kassetten, und es sind an der Oberseite der Grundplatte Stege 82 angeordnet, die Abteile 83 begrenzen, die zu den beiden Längsseiten des Ständers hin offen sind. Die beiden an den Enden des Ständers angeordneten Rippen 84 sind erhöht, damit sie den äußeren Kassetten einen besonders guten Halt geben. Die Grundplatte 81 ist als Hohlkörper ausgebildet und nimmt eine Schublade 85 auf, die ein Fach zur Aufnahme von Negativen darstellt. Dieser Ständer zeichnet sich durch einen besonders geringen Platzbedarf aus, so daß er die Unterbringung der Kassetten auf geringstem Raum gestattet.

Es versteht sich, daß die Erfindung nicht auf die dargegestellten Ausführungsbeispiele beschränkt ist, sondern daß eine Vielzahl von Variationen möglich ist, ohne den Rahmen der Erfindung zu verlassen. Dies gilt sowohl für die

./.

BAD ORIGINAL

spezielle Ausbildung der Kassette als auch des Ständers.
Dabei ist der Ständer als Zubehör zu den grundsätzlich
selbständig verwendbaren Kassetten zu betrachten, der an
die Ausbildung der Kassetten angepaßt sein muß. Bei der
Ausbildung der Kassetten ergeben sich viele Variationsmöglichkeiten bei der speziellen Ausbildung der Kassettenteile,
insbesondere bezüglich der Anordnung der einander überlappenden Abschnitte, der Größe und Ausbildung des Fensters und
des Rahmens, der Wahl der Werkstoffe und nicht zuletzt auch
bezüglich der Art der Stützglieder, wenn für eine solche
Kassette Stützglieder vorgesehen sind.

./.

Patentansprüche

1. Einrichtung zum geordneten Aufbewahren von Photographien, gekennzeichnet durch eine flache, rechteckige Kassette (62) mit einem dem Format der aufzubewahrenden Photographien angepaßten Grundriß und einem Ständer (61), der eine Anzahl zueinander paralleler Rippen (64) aufweist, welche die Kassetten (62) aufnehmende Abteile (65) begrenzen.

2. Kassette zum geordneten Aufbewahren von Photographien, insbesondere für eine Einrichtung nach Anspruch 1, dadurch gekennzeichnet, daß die aus einem Abschnitte (11, 12) ihrer Unter- und Oberseite sowie diese Abschnitte verbindende Stege (13) umfassenden Grundteil (1) und einem auf das offene Ende des Grundteiles aufgeschobenen, ebenfalls Abschnitte (21,22) ihrer Unter- und Oberseite sowie diese Abschnitte verbindende Stege (23) umfassenden Deckelteil (2) besteht und wenigstens im mittleren Bereich ihrer Oberseite ein glasklares Sichtfenster (3) aufweist.

3. Kassette nach Anspruch 2, dadurch gekennzeichnet, daß die lichte Weite (w) der Kassette so groß ist, wie die N-fache Dicke einer Photographie, wenn N die Anzahl der auf einem handelsüblichen Film vorhandenen Bilder ist.

4. Kassette nach Anspruch 2 oder 3, dadurch gekennzeichnet, daß die Außenflächen der an dem Grundteil (1) und dem Deckelteil (2) angebrachten Abschnitte (11,21;12,22) der Ober- und Unterseiten sowie der Stege (13,23) miteinander fluchten.

5. Kassette nach einem der Ansprüche 2 bis 4, dadurch gekennzeichnet, daß das Grundteil (1) und das Deckelteil (2) derart gestuft ausgebildet sind, daß der Oberseitenabschnitt (22) des Deckelteiles (2) den Unterseitenabschnitt (11) des Grundteiles (1) überlappt und

./.

die am Grundteil (1) und am Deckelteil (2) angebrachten Stege (13,23) im Überlappungsbereich zu den Ober-
und Unterseiten parallele, ineinandergreifende Schiebeführungen (17, 24) aufweisen.

6.   Kassette nach einem der Ansprüche 2 bis 5, dadurch gekennzeichnet, daß der Oberseitenabschnitt (11)
des Grundteiles (1) im mittleren Bereich eine Aussparung
(14) aufweist, in die eine Zunge (26) am Oberseitenabschnitt (22) des Deckelteiles (2) hineinragt.

7.   Kassette nach Anspruch 6 , dadurch gekennzeichnet, daß
der Oberseitenabschnitt (12) des Grundteiles (1) einen
Rahmenabschnitt für das Sichtfenster (3) bildet und das
Sichtfenster vollständig von einem Abschnitt des Deckelteiles (2) gebildet wird.

8.   Kassette nach einem der Ansprüche 2 bis 7. dadurch gekennzeichnet, daß das Grundteil (1) aus einem
undurchsichtigen und das Deckelteil (2) aus einem durchsichtigen Kunststoff besteht.

9.   Kassette nach den Ansprüchen 7 und 8, dadurch gekennzeichnet, daß der vom Oberseitenabschnitt (11) des Grundteiles (1) gebildete Rahmenabschnitt durch einen strukturierten Bereich des Oberseitenabschnittes (22) des
Deckelteiles (2) zu einem geschlossenen Rahmen ergänzt
wird.

10.   Kassette nach einem der Ansprüche 2 bis 9, dadurch gekennzeichnet, daß an übereinandergreifenden Abschnitten des Grundteiles (1) und des Deckelteiles (2)
elastisch ineinandergreifende Rasten (19) vorhanden sind.

./.

11. Kassette nach einem der Ansprüche 2 bis 10, dadurch gekennzeichnet, daß die am Grundteil (1) und am Deckelteil (2) vorhandenen Stege (13, 23) mit eine Riffelung aufweisenden Griff-Flächen (18,28) versehen sind.

12. Kassette nach einem der Ansprüche 2 bis 11, dadurch gekennzeichnet, daß insbesondere am Steg (23) des Deckelteiles (2) ein Etikettenfeld (4) angebracht ist.

13. Kassette nach einem der Ansprüche 2 bis 12, dadurch gekennzeichnet, daß die Kassette (31,41,52) mit einem ihr Aufstellen und/oder Aufhängen ermöglichenden Stützglied (32,42,55) versehen ist.

14. Kassette nach Anspruch 13, dadurch gekennzeichnet, daß das Stützglied (55) mit der Unterseite (51) des Grundteils lösbar verbunden ist.

15. Kassette nach einem der Ansprüche 2 bis 14, dadurch gekennzeichnet, daß die Unterseite (51) des Grundteiles mit mindestens einer das Aufhängen der Kassette ermöglichenden Öffnung (53,54) versehen ist.

16. Kassette nach den Ansprüchen 14 und 15, dadurch gekennzeichnet, daß das Stützglied (55) in die in der Unterseite (51) des Grundteils vorhandene Öffnung (53) eingesteckt ist.

./.

17. Ständer für eine Einrichtung nach Anspruch 1, dadurch gekennzeichnet, daß er eine Grundplatte (63, 81) aufweist, von der die Rippen (64, 82) nach oben abstehen und die mit einem Fach zur Aufnahme von Negativ-Streifen versehen ist.

18. Ständer nach Anspruch 17, dadurch gekennzeichnet, daß an einem Längsrand der Grundplatte (63) ein kastenartiger Behälter (67) angeordnet ist, an dessen dem anderen Längsrand der Grundplatte (63) zugewandten Außenseite (66) sich die senkrecht zu den Längsseiten der Grundplatte gerichteten Rippen (64) anschließen.

19. Ständer nach Anspruch 18, dadurch gekennzeichnet, daß der kastenartige Behälter (67) mit einem Stülpdeckel (68) versehen ist.

20. Ständer nach Anspruch 17, dadurch gekennzeichnet, daß die Grundplatte (81) als Hohlkörper ausgebildet ist und sich das Fach unter der die Rippen (82) tragenden Oberseite der Grundplatte befindet und von einem Rand der Grundplatte her zugänglich ist.

21. Ständer nach Anspruch 20, dadurch gekennzeichnet, daß in der Grundplatte (81) eine Schublade (85) zur Aufnahme der Negative angeordnet ist.

22. Ständer nach einem der Ansprüche 17 bis 21, dadurch gekennzeichnet, daß seine Grundplatte (63) an der Unterseite eine Vertiefung (71) aufweist, die ebensogroß ist wie die Gesamtheit der an der Oberseite der Grundplatte von den Rippen (64) begrenzten Abteile (65).

Fig. 1

Fig. 2

Fig. 3

0028283

Fig. 4

Fig. 5

Fig. 6

Fig. 7

IX

41

41

45

46

44

44

44

44

42

47

43

Fig. 8

Fig. 9

IX

Fig. 10

Fig. 11

Fig. 12

0028283

Fig. 13

Fig. 14

Fig. 15

**Europäisches Patentamt**

# EUROPÄISCHER RECHERCHENBERICHT

Nummer der Anmeldung
EP 80 10 1246

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 405 011 (LICINVEST) <br> * Das ganze Dokument * | 1-12, 17-22 |
| | FR - A - 2 403 574 (LICINVEST) <br> * Seite 15, Zeilen 32-40; Seiten 16-23; Abbildungen 29a-52c * | 1-12, 17-22 |
| | FR - A - 2 413 624 (FIBELKORN) <br> * Das ganze Dokument * | 2-13 |
| | CH - A - 554 660 (CARVIL) <br> * Das ganze Dokument * | 2-12 |
| P | DE - A - 2 835 165 (THEYSOHN) <br> * Das ganze Dokument * | 2-13 |
| | DE - A - 2 813 048 (KOMET-PLASTIK) <br> * Ansprüche 14,17; Abbildungen 3-6 * | 13-16 |

**KLASSIFIKATION DER ANMELDUNG (Int. Cl.)**

A 47 G 1/06
1/14
G 03 B 21/54

**RECHERCHIERTE SACHGEBIETE (Int. Cl.)**

A 47 G
G 03 B
G 11 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 03-02-1981 | BOURSEAU |

EPA form 1503.1 06.78